# EUROPEAN PATENT SPECIFICATION

(11) **EP 3 995 916 B1**
(45) Date of publication and mention of the grant of the patent: **15.05.2024**
(21) Application number: 20206092.7
(22) Date of filing: 06.11.2020
(51) Int. Cl.: G05B 19/418, B67C 3/00

(54) **CHANGEOVER SETTING SYSTEM AND METHOD FOR A POURABLE PRODUCT PACKAGING PLANT AND PRODUCTION METHOD FOR A POURABLE PRODUCT PACKAGING PLANT**
SYSTEM UND VERFAHREN ZUR UMSTELLUNG EINER VERPACKUNGSANLAGE FÜR FLIESSFÄHIGE PRODUKTE UND VERFAHREN ZUR HERSTELLUNG EINER VERPACKUNGSANLAGE FÜR FLIESSFÄHIGE PRODUKTE
SYSTÈME ET PROCÉDÉ DE RÉGLAGE D'UN CHANGEMENT DE FORMAT POUR UNE INSTALLATION DE CONDITIONNEMENT DE PRODUITS LIQUIDES ET PROCÉDÉ DE PRODUCTION POUR UNE INSTALLATION DE CONDITIONNEMENT DE PRODUITS LIQUIDES

(43) Date of publication of application: 11.05.2022
(73) Proprietor: Sidel Participations, 76930 Octeville-sur-Mer (FR)
(72) Inventor: TUBERTI, Alberto, 43126 Parma (IT); PADOVANI, Matteo, 43126 Parma (IT); DAIGNEAULT, Jean-François, Laval, QC H7W 4V3 (CA)
(74) Representative: Sidel Group

(56) References cited:
- WO-A1-2019/048051
- WO-A1-2019/174806
- US-A1- 2012 032 364
- US-A1- 2020 189 896

## Description

### TECHNICAL FIELD

The present invention relates to a machine-implemented changeover assistance system and method for a plant for processing containers for pourable products.

### BACKGROUND ART

The present solution may be implemented in plants for processing any type of containers, such as bottles or other kinds of receptacles made of glass, plastic (PET), aluminium, steel and composite materials, that are to be filled with a pourable product, in particular a food product, including sparkling liquids, such as sparkling water, non-alcoholic beverages and beer; non-effervescent liquids, such as natural water, milk, juices, tea, integrators for sport activities or wine.

As it is known, a plant for processing containers comprises a number of processing machines arranged to form a container processing line, which may include for example:
a forming machine, for example a blower, configured to form, e.g. by blowing, containers to be filled starting from so-called preforms;
a filling machine, configured to fill the containers with a pourable product, for example a food beverage;
a capping machine, configured to close the filled containers with caps;
a labelling machine, configured to attach labels to the filled containers;
a packing machine, configured to arrange the containers in packs; and
a palletizing and wrapping machine, at the end of the container processing line, for forming pallets of containers or packs, for their subsequent transport.

The forming, filling and capping machines may be combined in a single combined, or "combi", processing machine, configured to perform the container forming, filling and capping operations.

The container processing plant may also include further processing machines, such as a product preparation machine, a sterilising machine, a pasteurization machine or a bottle washing machine. The plant also generally includes a number of conveyors, configured to convey elements being processed, such as the preforms, the formed containers and then the filled containers and container packs, across the whole container processing line.

In a known manner, several format or recipe changeovers generally occur in the container processing plant during its operation (e.g. at daily or other fixed or variable time intervals), for changing, completely or partially, the "recipe" of the container production.

In particular, a recipe is characterized by several parameters and features related to the containers, the products contained therein and/or the packs and pallets used for packing and stocking the same containers, for example: the shape and size of the containers; the type and material of the same containers; the type of the products contained in the containers; the type, shape and size of the labels; the type and material of the so-called secondary packaging (i.e. wrapping film, wrap around carton, etc.); the size and configuration of the pallets used to transport the containers or packs of containers.

A production volume (e.g. expressed in number of containers) is also generally associated with each recipe to be implemented in the container processing plant.

Changeover operations are therefore required in the container processing machines, according to the parameters or features that are to be modified when changing the production recipe. The changeover operations for some or all of the container processing machines may, at least in part, be automated or semi-automated; several operations are, however, to be performed manually by operators at the site of the container processing plant.

Manual changeover operations are typically performed by operators interfacing with the container processing machines; these manual operations are thus dependent on the promptness and ability of the operators (who may have a variable skill and experience) and may require even a considerable amount of time, with an associated decrease of the production rate (since container processing operations are interrupted during the changeover operations).

WO2019/048051 A1 discloses a system for automated adjustment of a container filling machine. WO2019/174806A1 discloses a container-processing system, and a method having a management of settings for a container-processing system. US2012032364A1 discloses a method of operating a plant for the treatment of containers, which may include treating the containers with pre-set treatment parameters by a first treatment unit of the plant. The treatment parameters are capable of being altered at least in part and depend at least in part upon product parameters-characteristic of the containers to be treated. US2020189896A1 discloses a container processing installation for processing containers such as bottles, comprising at least one container processing machine and a mobile collaborating robot that is designed for robot-robot interaction and/or robot-human interaction, wherein said collaborating robot is designed to cooperate during exchange of a component of the container processing machine.

The present Applicant has realized that management and implementation of changeover operations may therefore be not fully satisfactory in current container processing plants.

### DISCLOSURE OF INVENTION

The aim of the present invention is to provide a solution that will enable the problems highlighted previously to be solved.

According to the present invention a machine-implemented changeover assistance system and method are provided, as defined in the appended claims.

### BRIEF DESCRIPTION OF THE DRAWINGS

For a better understanding of the present invention, preferred embodiments thereof are now described, purely by way of non-limiting example, with reference to the attached drawings, wherein:
- Figure 1 is a general schematic diagram of a machine-implemented changeover assistance system in a container processing plant, according to an embodiment of the present solution;
- Figure 2 shows a display of changeover operations in a mobile terminal of an operator in the container processing plant;
- Figures 3A-3C are schematic diagrams related to changeover operations performed in the changeover assistance system of Figure 1; and
- Figure 4 is a schematic flowchart of operations performed by a main processing unit in the changeover assistance system of Figure 1.

### BEST MODE FOR CARRYING OUT THE INVENTION

As will be discussed in detail in the following, the present solution relates to a machine-implemented changeover assistance system for technicians (or other operators) in a container processing plant, providing changeover operating instructions to optimize the format or recipe changeover of the container processing line.

The changeover assistance system, based on a number of available operators and the variation of features and parameters associated to a recipe changeover, is configured to assign to each available operator changeover operating phases and associated changeover operations, correlating each changeover operating phase to the operative status of a related container processing machine.

In particular, the changeover assistance system is configured to perform a cross-check between a database of recipes that may be implemented in the container processing plant and a database of standard operating procedures for changing the configuration of the container processing machines, so as to determine the changeover phases required for a recipe changeover, based also on information regarding the logic of the container processing line. The changeover assistance system is further configured, for each changeover phase, to: determine a time correlation of the changeover phase with the operative status of at least one container processing machine of the container processing line; and assign the changeover phase to at least one available operator in the container processing plant, providing detailed instructions on the operations required to implement the same changeover phase and the expected time to perform the same operations.

As will be discussed in detail, the changeover assistance system is configured to provide to a mobile terminal of each operator the detailed instructions concerning each changeover phase assigned to the same operator, for a quick and immediate check and verification.

The changeover assistance system may also be configured to: receive a plurality of recipes to be implemented by the container processing line, each recipe being associated to a production volume and to parameters and features of the container processing machines; determine a plurality of possible sequences of recipes and the parameter variations associated to each determined sequence; and select a specific sequence of recipes designed to generally optimize the changeover operations.

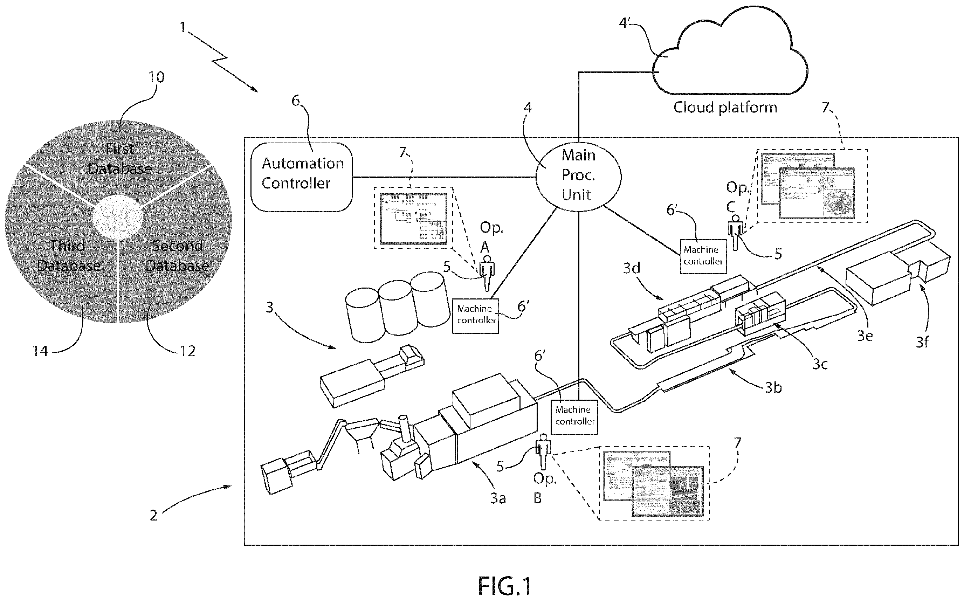

Figure 1 is a diagrammatic representation of a machine-implemented changeover assistance system according to an embodiment of the present invention, generally denoted with 1, for a container processing plant 2 including a number of container processing machines 3 arranged along a container processing line.

For example, the container processing machines 3 comprise, from the inlet to the outlet of the container processing line:
a combined forming, filling and capping machine 3a, receiving container preforms and providing filled and capped containers;
a first conveyor 3b, transporting the filled and capped containers received from the combined machine 3a;
a labelling machine 3c, applying labels to the containers received from the first conveyor 3b;
a packing machine 3d, encasing the labelled containers provided by the labelling machine 3c, in suitable packs;
a second conveyor 3e, transporting the pack of containers received from the packing machine 3d; and
a palletizing machine 3f, arranging the packs of containers in pallets, ready for stocking and transportation.

The changeover assistance system 1 comprises a main processing unit 4, configured to determine changeover phases and associated changeover operations required to implement a recipe changeover and, in a possible embodiment, to assign the same changeover phases to available operators 5, as will be discussed in details in the following;, three operators 5, denoted as Op.A, Op.B and Op.C, are available for carrying out changeover in the container processing plant 2 shown in Figure 1.

The main processing unit 4 may be implemented by any suitable computing unit, executing a set of software instructions stored in a non-volatile memory; in a possible embodiment, the main processing unit 4 is implemented as a cloud processing platform 4', remotely accessible with any suitable hardware and software equipment.

The main processing unit 4 is operatively coupled (e.g. via any suitable wireless communication link) to an automation controller 6 of the container processing line, which is coupled to respective control units 6' of the container processing machines 3; in a known manner, the automation controller 6 is configured to supervise general operation of the container processing machines 3 and receives information about the operative status of the same container processing machines 3.

As an alternative (here not shown), the main processing unit 4 may be operatively coupled directly to the respective controllers 6' of the container processing machines 3, so as to receive the information about their operative status.

The main processing unit 4 also receives, e.g. from the automation controller 6, information relating to the configuration of the container processing line (i.e. relating to the number, type and characteristics of the container processing machines 3, e.g. in terms of nominal speed and their arrangement along the line) and, in a possible embodiment, a desired production plan of the container processing plant 2 (i.e. in terms of sequence of one or more recipes to be implemented, with an associated production volumes), which may be set by a production manager of the container processing line.

In an alternative embodiment, the main processing unit 4 may receive a list of all possible recipes that may be implemented in the container processing plant 2, being able to automatically set an optimized production plan.

The main processing unit 4 may be configured to receive further inputs, such as a time needed by an operator 5 to move from one container processing machine 3 to another; the time for all container processing machines 3 to empty out of containers; the accumulation times for each container/pack; the discharge times for each container/pack; the time required to execute CIP - Cleaning In Place - procedures.

In general, the main processing unit 4 may receive as inputs all sort of information that may be required to determine an optimized recipe change-over of the container processing line.

The main processing unit 4 is further coupled (via any suitable wireless communication link) to mobile terminals (e.g. a smartphone, a phablet, a tablet running a suitable software application, "app") 7 carried by the operators 5 of the container processing plant 2; each mobile terminal 7 is provided with display and interface modules, in order to display the changeover operating phases required from the respective operator 5, the expected time available to carry out the same changeover operating phases and the associated detailed changeover operations. The operators 5, once logged in to the changeover assistance system 1 with a respective account, may thus be led to the optimal change-over procedure, complying with the timing and operations prompted by the changeover assistance system 1.

The changeover assistance system 1 further comprises a first database unit 10, which is configured to store recipe grouped data, i.e. data-set of parameters and features for each recipe that may be implemented in the container processing plant 2. The first database unit 10 may be implemented by any suitable non-volatile data storage unit; for example, it may be implemented in the cloud processing platform 4'.

For example, the first database unit 10 may be configured to store, for each recipe, parameters and features related to: the container shape and size (e.g. round, square); the container type (e.g. standard PET, transparent resin R-PET, Monolayer PET); the liquid product (e.g. juice, nectar, energy drink, isotonic, soft drink, milk or milk-based product, product with bits of fruit); the label type (e.g. roll fed, precut wraparound, full or partial sleeve); the cap type (flat cap, sport cap); the secondary package type (e.g. shrink film, stretch Film, wrap around carton); the pallet size (e.g. 1000x1200 mm, 1200x800 mm, 600x800 mm); the pallet material (e.g. plastic, wooden).

In general, each recipe that may be implemented in the container processing plant 2 may include any possible combination of the above parameters and features.

The changeover assistance system 1 further comprises a second database unit 12, which may also be implemented in the same cloud processing platform 4' and is configured to store information about all possible changeover operations and information about the estimated time required to execute the same operations, for each container processing machine 3, i.e. a list of detailed standard operations to be performed in order to implement each changeover phase.

For example, the second database unit 12 may store the detailed operations required for changing a label format in the labelling machine 3c; or the operations required for modifying a container shape and format in the combined machine 3a; the operations required to discharge a container from the container processing line.

The changeover assistance system 1 further comprises a third database unit 14, which may also be implemented in the cloud processing platform 4' and is configured to store changeover information related to a container processing line logic, i.e. to pre-requisites, priorities or similar rules in the changeover operations to be performed along the processing line 1. For example, some of the changeover operations in a same container processing machine 3 or in different container processing machines 3 may have to be performed in a specific sequential order, execution of a first changeover operation being first required to allow later execution of a second changeover operation in a same or different container processing machine 3; and/or one or more of the container processing machines 3 may not be operated at a same time.

It is noted that two or more of the above first, second and third database units 10, 12, 14 may be implemented as a single data storage unit having separate and distinct data-storage areas.

As will be discussed in detail in the following, the main processing unit 4, based on the configuration of the container processing line and the requested changeover (or set of recipe change-overs according to a production plan) and considering the changeover information related to the container processing line logic, is configured to perform a matching, or cross-check, of relevant data stored in the first, second and third database units 10, 12, 14, in order to determine an improved or optimized sequence of changeover operating phases required to implement the recipe changeover and the associated changeover operations, and moreover to estimate a resulting estimated changeover time.

In a possible embodiment, the main processing unit 4 is further configured to assign each changeover operating phase and associated changeover operations to at least one available operator 5 and determine the time relation of the same changeover operating phases with the operative states of the related container processing machines 3.

In particular, the main processing unit 4 may be configured to determine the changeover operating phases in order to optimize the recipe changeover, in terms of one or more optimization criteria, including a total time required for changeover and an overall safety of the operations both for the operators 5 and the container processing plant 2.

The determined changeover operating phases and associated changeover operations are then communicated to the operators 5, with the main processing unit 4 sending the data related to the changeover operating phases to the mobile terminals 7 of the same operators 5. Each operator 5 is thus provided with detailed information about the changeover phases and changeover operations the same operator has to perform in order to implement the recipe changeovers required by the production plan.

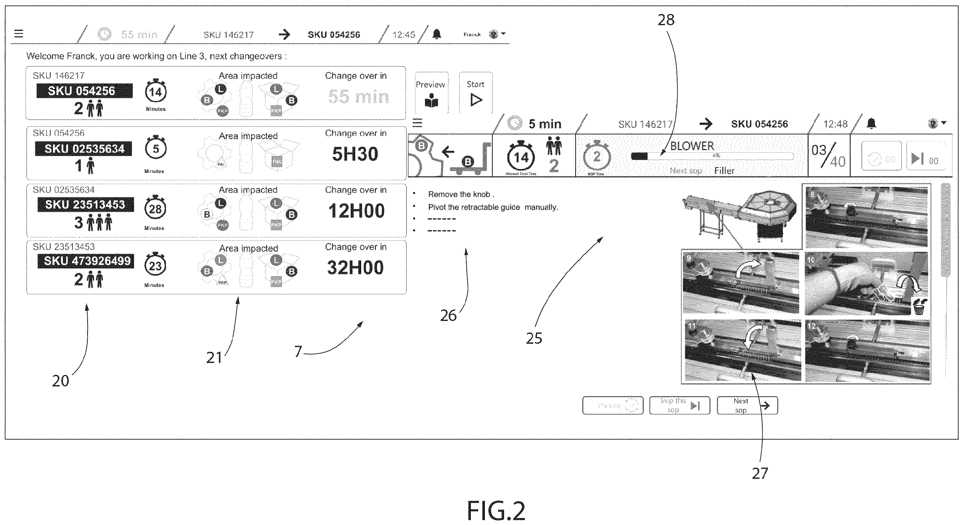

In this connection, Figure 2 shows an example of information displayed on the display module of a mobile terminal 7 of an operator 5 in the container processing plant 2.

In a first displayed area 20, upcoming recipe changeovers are listed, in a time order, with the number of operators involved and a total expected time required for the operations to be performed by the operator; it is noted that each recipe is denoted with a respective SKU (Stock Keeping Unit) code.

In a second displayed area 21, adjacent to the first displayed area 20, the area of the container processing line impacted by the changeover operations is showed (the container processing machines 3 involved being schematically depicted); also, the time to the next changeover operations (e.g. 55 minutes in the case of the earliest changeover) is indicated.

The operator is then able to access (interacting with suitable interface elements) more detailed information about the changeover operations associated to each changeover phase, as shown in the same Figure 2; in particular, the operator may display a detailed form 25 for each of the changeover operations that will have to be performed, with a detailed textual description 26 of the specific actions and also visual (image and/or video) depictions 27 of the same actions.

In each form 25, a displayed area 28 shows the time required for each operation and the completion percentage of the whole changeover phase, with the possibility to display next changeover operations and skip the current operation.

It is noted that all displayed information are updated by the main processing unit 4 in real time, during implementation of the recipe changeover. It is also noted that two or more operators may cooperate in the execution of one or more of the changeover operations, based on the determinations made by the main processing unit 4.

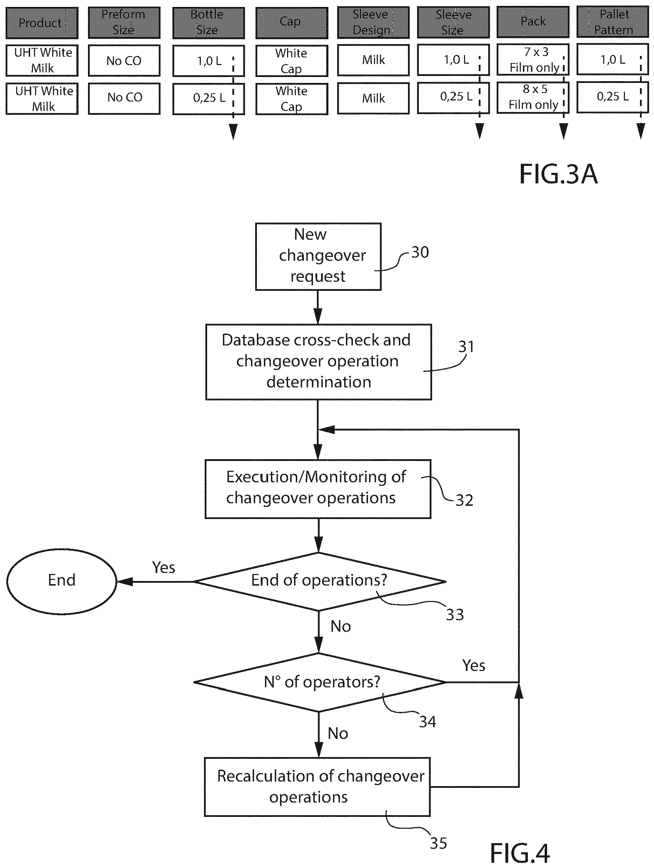

With reference to Figure 3A, an example of recipe changeover is now presented in greater details.

In this example, referring to a complete line changeover with a same liquid product, the recipe changeover involves changes in a bottle size (from 1 1 to 0,25 1), sleeve size (again, from 1 1 to 0,25 1), pack format (from 7x3 to 8x5) and pallet pattern (again, from 1 1 to 0,25 1); in the same example, other features of the recipe are not modified in the changeover.

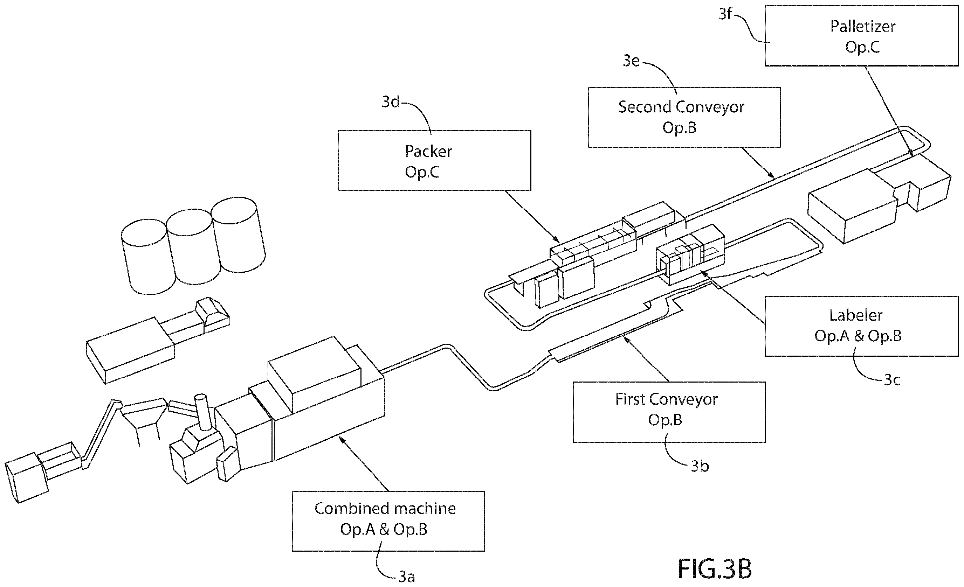

As shown schematically in Figure 3B, the main processing unit 4 determines and assigns the following changeover phases: in the combined machine 3a to operators Op.A and Op.B; in the first conveyor 3b to operator Op.B; in the labelling machine 3c to both operators Op.A and Op.B; in the packing machine 3d to operator Op.C; in the second conveyor 3e to operator Op.B; and in the palletizing machine 3f to operator Op.C.

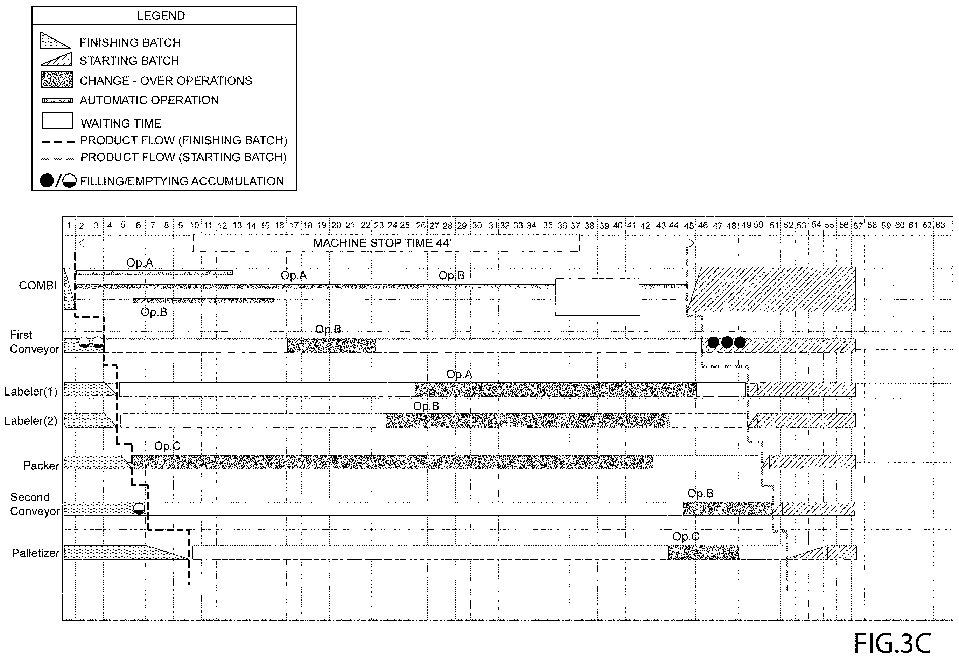

Figure 3C diagrammatically shows a temporal sequence of all the changeover phases required to implement the recipe changeover, as determined by the main processing unit 4 implementing the above discussed solution; in the example, the whole changeover requires a machine stop time of 44 minutes.

As shown in the same Figure 3C, operator Op.A first starts automated preform discharge and performs mould changeover in the combined machine 3a; then starts automatic blower cleaning and performs a sleeve change format in a first portion of the labelling machine 3c. Operator Op.B first cooperates with operator Op.A in the mould changeover in the combined machine 3a; later performs required changes to the first conveyor 3b; afterwards, the same operator Op.B performs the sleeve change format in a second portion of the labelling machine 3c; and then performs required changes to the second conveyor 3e. Operator Op.C first performs the required format change in the packing machine 3d; and then performs the required format change in the palletizing machine 3f.

In the same Figure 3C, particular events characterizing the changeover operations are highlighted, such as a time when the last pallet has been produced before machine stop and the first pallet being produced with the restart of production after recipe changeover, the time between these two events corresponding to the total machine stop time (in the example, 44 minutes).

Operations performed by the main processing unit 4 to determine the required changeover phases are now discussed in more details, with reference to a possible embodiment and the flowchart shown in Figure 4.

In general, and as previously discussed, the main processing unit 4, based on the parameter and feature modifications required by the recipe changeover, determines, for each container processing machine 3 (e.g. starting from the first to the last along the container processing line) which are the modifications required and which are the operators 5 available to perform the changeover operations.

The main processing unit 4 may simulate the sequence of changeover operations to be performed and, based on the simulations, determine the optimized changeover phases to be assigned to all available operators 5 (as discussed above, the optimization being based on various optimization criteria, e.g. time and/or safety requirements).

In a possible embodiment, the main processing unit 4 may be further configured for continuous and real-time monitoring of the number of operators 5 available to execute the changeover operations and to adjust and recalculate the changeover phase sequence based on a possible difference of the same number with respect to an expected number.

In more details, and as shown in the same Figure 4, in a first step 30, the main processing unit 4 determines the occurrence of a new changeover request. It is noted that changeover may be requested and initiated by a production manager of the container processing plant 1 based on a preset production plan, or automatically determined by the same main processing unit 4, based on an optimized production plan.

In a subsequent step 31, the main processing unit 4 carries out the cross-check between the data stored in the first, second and third databases 10, 12, 14, in order to determine the optimized sequence of changeover operating phases.

In particular, the main processing unit 4 determines from the first database 10 the changes required by the recipe changeover and consequently determines the changeover operations for all the container processing machines 3 in order to implement the above changes, based on the changeover operation data stored in the second database 12 and the information related to the container processing line logic stored in the third database 14.

The main processing unit 4 moreover determines, considering an expected number of available operators 5 in the container processing plant 1, the operations to assign to each operator 5 in order to optimize the overall changeover procedure and expected time.

The main processing unit 4 then provides the changeover information to the operators 5 via their respective mobile terminals 7, in order to execute the changeover process, as shown in step 32 (the same main processing unit 4 may be configured to automatically start and implement at least part of the changeover operating phases).

The main processing unit 4 may also be configured to monitor the changeover operations and receive feedback from the container processing machines 3, in particular monitoring the end of the changeover process and the resulting changeover time, as shown in step 33.

According to a possible embodiment, as shown at step 34, the main processing unit 4 is configured to continuously monitor the actual number of available operators (e.g. checking the number of mobile terminals 7 logged in the changeover assistance system 1).

If the number corresponds to the expected number of operators, the main processing unit 4 continues execution and monitoring of the changeover operations (in the above step 32); otherwise, if the number does not correspond to the expected one, the main processing unit 4 implements a recalculation of the remaining changeover phases and operations, based on the actual number of available operators 4, as shown in step 35.

The above operations are carried out until the recipe changeover has been terminated, with the changeover assistance system 1 preparing for the next planned changeover (if already set) or for receiving a new changeover request.

The advantages the present solution allows to achieve are clear from the foregoing description.

It is in any case underlined that the disclosed changeover assistance system 1 allows to improve and speed-up the changeover operations in the container processing plant 1, and moreover to achieve an optimized change over sequence throughout the complete processing line.

The changeover assistance system 1 provides the operators 5 with clear, simple and intuitive procedures to be performed, with an aligned and unified user interface for each container processing machine 3 (the interface being displayed in the respective mobile terminal 7).

The changeover assistance system 1 allows to meet market requirements for more frequent product and format changeovers and flexible production runs, at the same time complying with required standards in terms of food safety, product traceability, hygiene, ergonomic operator procedure.

Advantageously, a suitable color and coding identification of changeover parts to identify each recipe may be adopted along the complete line, for all container processing machines 3, to further improve the operator ease of experience.

In particular, it is again underlined that the main processing unit 4 may be configured to automatically establish the production plan of the container processing plant 1, i.e. the sequence of recipe changeovers, given a desired volume of different products to be produced. In this case, the optimization algorithm and the related simulations performed by the same main processing unit 4 also allow evaluation of an optimized sequence of recipe changeovers, allowing to meet desired optimization requirements, e.g. to achieve a minimum changeover time and consequently a minimum stop time for the container processing plant 1.

Moreover, in a possible implementation, the main processing unit 4 may also be configured to manage in a fully automated or semi-automated manner all the change-over procedure, directly driving the container processing machines 3 in the execution of the changeover operations (e.g. with automatic recipe setting, automatic line adjustment, automatic line emptying and so on), possibly automatically executing at least some of the change-over operations. It is noted that AGVs - Automated Guided Vehicles - may be provided for this purpose in the container processing plant, as the "operators" 5, which may therefore be intended as human or robotic operators.

The main processing unit 4 may further be configured to continuously monitor the change-over operations (e.g. assessing a difference between the changeover actual and estimated or target times), interfacing with the container processing machines 3 and receiving feedbacks therefrom during the change-over process.

The same main processing unit 4 may be configured to also consider CIP/SIP (Cleaning/Sterilisation In Place) procedures for the container processing line, when determining the optimized changeover operations.

Moreover, the changeover assistance system may provide each operator 5 the possibility to request help or further assistance in case of difficulties or unexpected events during execution of the changeover operations; similarly to what previously discussed, the main processing unit 4 may be configured to recalculate in real-time, based on the operators available to assist, the sequence of changeover phases and operations.

It is also again underlined that the disclosed changeover assistance system 1 may be advantageously applied irrespective of the type of processing plant, the type of container processing machines 3 or the type of containers and products being processed.

According to another aspect, it is provided a changeover setting system 1 for a pourable product packaging plant 2. According to that other aspect, it is provided a changeover setting method for the plant 2. According to that other aspect, the plant 2 comprises a plurality of processing machines 3 for implementing a production recipe. The processing machines 3 can comprise for example a blowing machine and/or a filling machine and/or a labelling machine and/or a capping machine and/or a wrapping machine and/or a palletizing machine and/or a depalletizing machine and/or a packing machine and/or a crating machine and/or a decrating machine and/or a pasteurizing machine and/or a washing machine and/or a drying machine. Each processing machine 3 is installed in the plant according to a plant layout. The plant 2 comprises the setting system 1. The setting system 1 is configured for carrying out the setting method. The setting method comprises, based on a number of available operators 5 available and a required recipe variation, determining automatically a plurality of changeover phases, each of which to be carried out on a respective machine 3 for obtaining the variation. The setting method comprises, for each determined phase, automatically temporally correlating the determined phase to the operational status of at least one other machine 3, said other machine 3 being not interested and/or not involved by the determined phase. The setting method comprises, for each correlated phase, automatically selecting at least one respective operator. The setting method comprises, for each correlated phase, automatically assigning the correlated phase to the selected operator. Thanks to the temporally correlating each determined phase to the operative status of at least one machine 3 not interested and/or not involved by the determined phase, the setting method can optimize and/or minimize the changeover time required for performing the plant changeover according to the recipe variation, to minimize the plant downtime correlated to the recipe variation. In fact, at least one specific changeover phase which interests or involves a specific machine, can in this way start during the operation of another machine which can be considered not interested or involved by the specific changeover phase. As this another machine is still running during the start of the changeover phase, the changeover can start before the complete stop of the plant.

The plant 2 is configured to implement a plurality of different recipes.

The recipes are defined by respective data sets. Each data set defines a recipe and includes a plurality of values associated to respective parameters. The parameters include the format of the container and/or the format of a label to be applied on the container and/or a type of pourable product and/or the type of closure to be applied on the filled container and/or the type of secondary or tertiary packaging and/o or the palletization layout. The type of pourable product can be indicative of the product being carbonated, not carbonated, sensitive, hot fill, or of any other feature of the product.

The determining is carried out by cross-checking between said data sets and local information. The local information is indicative or representative of a link between the configuration of at least one machine 3 or of each machine 3 and the variation of each parameter. As the required variation of the recipe implies a variation of at least one parameter, in this way it is increased the flexibility in determining the correct changeover phases with respect to the variability of the recipe variation.

The correlating is carried out by cross checking between said local information and global information. The global information is indicative or representative of the global design or layout of the plant 2. In this way the setting method can optimize the changeover, to reduce the downtime of the plant, as a function of the specific configuration or layout of the plant 2, which can change even with the same machines.

According to that other aspect, it is provided a production method for the plant 2. The plant 2 is configured for carrying out the production method. The production method is based on a production requirement comprising a plurality of production output values to be produced by the plant 2 according to a list of respective different recipes. Each output value is associated to a respective recipe of the list in the sense that, for each output value, it is required to have the output value by the plant 2 implementing the respective recipe. The production method comprises executing the changeover setting method for each couple of different recipes of the list. Each execution of the setting method is carried out with a required variation comprising the variation from a first recipe of the respective couple to a second recipe of the same couple and/or vice versa. Therefore the changeover setting method is carried out for each couple of different recipes of the list, to derive, for each couple of different recipes of the list, the time required for performing the changeover of the plant 2 from a first recipe of the couple to a second recipe of the same couple and/or vice versa.

The production method comprises, for each couple of different recipes of the list and by means of the setting system 1, deriving a changeover time required for performing the plant changeover between the recipes of the couple.

The production method comprises automatically obtaining a production program by means of the setting system 1. The production program comprises a temporally ordered sequence of recipes to be implemented by the plant. Said automatically obtaining is carried out to minimize the total changeover time of the production program. In this way the setting method can be employed to modify also an initially proposed production program, to optimize the total changeover time of the production program which will be actually performed.

The system 1 is configured, for each selected operator, for automatically sending to a respective mobile terminal 7 operative information regarding at least one phase assigned to the operator 5.

## Claims

1. A changeover setting system (1) for a pourable product packaging plant (2), said plant (2) comprising a plurality of processing machines (3) for implementing one production recipe,
wherein the system (1) is configured, based on a number of operators (5) and a required recipe variation, for:
- determining automatically a plurality of changeover phases, each of which to be carried out on a respective machine (3) of the plurality of processing machines, for performing the changeover of the plant (2) according to the recipe variation;
- for each determined changeover phase, automatically temporally correlating the determined phase to the operational status of at least one machine (3) of the plurality of processing machines, said at least one machine being not interested by the determined changeover phase;
- for each correlated changeover phase, automatically selecting at least one respective operator and automatically assigning the correlated phase to the selected operator.

2. The system according to claim 1, wherein:
- the plant (2) is configured to implement a plurality of different recipes;
- the recipes are defined by respective data sets, each data set including a plurality of values associated to respective parameters, said parameters including a format of the container and/or a format of a label to be applied on the container and/or a type of pourable product and/or a type of closure to be applied to the filled container and /or a type of secondary and/or tertiary packaging;
- the system (1) is configured for carrying out said determining by cross-checking between said data sets and local information, said local information being indicative of a link between the configuration of at least one machine (3) and the variation of each parameter.

3. The system according to claim 2, wherein the system (1) is configured for carrying out said correlating by cross checking between said local information and global information, said global information being indicative of a global design or layout of the plant (2).

4. The system according to any of the previous claims, wherein the system (1) is configured, based on a production requirement comprising a plurality of production output values to be produced by the plant (2) according to respective different recipes, for carrying out, for each couple of different recipes of the list, said determining, correlating, selecting and assigning;
wherein the system (1) is configured, for each couple of different recipes of the list, for deriving a changeover time required for performing the plant changeover between the recipes of the couple;
wherein the system (1) is configured for automatically obtaining a production program comprising a temporally ordered sequence of recipes to be implemented by the plant, the system (1) being configured for carrying out said automatically obtaining to minimize the total changeover time of the production program.

5. The system (1) according to any of the preceding claims, wherein the system (1) is configured, for each selected operator, for automatically sending to a respective mobile terminal (7) operative information regarding at least one phase assigned to the operator (5).

6. A pourable product packaging plant (2) comprising:
- a plurality of processing machines (3) for implementing a production recipe;
a system (1) according to any of the previous claims.

7. A changeover setting method (1) for a pourable product packaging plant (2), said plant comprising a plurality of processing machines (3) for implementing a production recipe,
wherein the method comprises, based on a number of operators (5) and a required recipe variation, for:
- determining automatically a plurality of changeover phases, each of which to be carried out on a respective machine (3) of the plurality of processing machines, for performing the changeover of the plant (2) according to the recipe variation;
- for each determined changeover phase, automatically temporally correlating the determined phase to the operational status of at least one machine (3) of the plurality of processing machines, said at least one machine being not interested by the determined changeover phase;
- for each correlated changeover phase, automatically selecting at least one respective operator (5) and automatically assigning the correlated phase to the selected operator (5).

8. The method according to claim 7, wherein:
- the plant (2) is configured to implement a plurality of different recipes;
- the recipes are defined by respective data sets, each data set including a plurality of values associated to respective parameters, said parameters including a format of the container and/or a format of a label to be applied on the container and/or a type of pourable product and/or a type of closure to be applied to the filled container and /or a type of secondary and/or tertiary packaging;
- said determining is carried out by cross-checking between said data sets and local information, said local information being indicative of a link between the configuration of at least one machine and the variation of each parameter.

9. The method according to claim 7 or 8, wherein said correlating is carried out by cross checking between said local information and global information, said global information being indicative of the global design or layout of the plant.

10. A production method (1) for a pourable product packaging plant (2), said plant (2) comprising a plurality of processing machines (3) for implementing a production recipe, wherein the production method comprises:
- based on a production requirement comprising a plurality of production output values to be produced by the plant according to a list of respective different recipes, executing a method according to any of claims 7 to 9 for each couple of different recipes of the list, each execution of the setting method being carried out with a required variation comprising the variation from a first recipe of the couple to a second recipe of the same couple and/or vice versa;
- for each couple of different recipes of the list, automatically deriving a changeover time required for performing the plant changeover between the recipes of the couple;
- automatically obtaining a production program comprising a temporally ordered sequence of recipes to be implemented by the plant, said automatically obtaining being carried out to minimize the total changeover time of the production program;
- performing the production by means of the plant (2) and according to the obtained production program.

## Patentansprüche

1. System (1) zum Einstellen einer Umstellung für eine Verpackungsanlage (2) für fließfähige Produkte, wobei die Anlage (2) eine Mehrzahl von Verarbeitungsmaschinen (3) zum Implementieren eines Produktionsrezepts umfasst, wobei das System (1) basierend auf einer Anzahl von Bedienern (5) und einer geforderten Rezeptvariation ausgelegt ist zum:
- Bestimmen einer Mehrzahl von Umstellungsphasen automatisch, von denen jede auf einer jeweiligen Maschine (3) der Mehrzahl von Verarbeitungsmaschinen zum Durchführen der Umstellung der Anlage (2) gemäß der Rezeptvariation durchzuführen ist;
- für jede bestimmte Umstellungsphase, automatischen zeitlichen Korrelieren der bestimmten Phase mit dem Betriebszustand mindestens einer Maschine (3) der Mehrzahl von Verarbeitungsmaschinen, wobei die mindestens eine Maschine von der bestimmten Umstellungsphase nicht betroffen ist;
- für jede korrelierte Umstellungsphase, automatischen Auswählen von zumindest einem jeweiligen Bediener und automatischen Zuweisen der korrelierten Phase zu dem ausgewählten Bediener.

2. System nach Anspruch 1, wobei:
- die Anlage (2) dazu ausgelegt ist, eine Mehrzahl von unterschiedlichen Rezepten zu implementieren;
- die Rezepte durch jeweilige Datensätze definiert sind, wobei jeder Datensatz eine Mehrzahl von Werten beinhaltet, die jeweiligen Parametern zugeordnet sind, wobei die Parameter ein Format des Containers und/oder ein Format eines auf dem Container anzubringenden Etiketts und/oder eine Art von fließfähigem Produkt und/oder eine Art von auf dem gefüllten Container anzubringendem Verschluss und/oder eine Art von Sekundär- und/oder Tertiärverpackung beinhalten;
- das System (1) dazu ausgelegt ist, das Bestimmen durch Abgleichen zwischen den Datensätzen und den lokalen Informationen durchzuführen, wobei die lokalen Informationen kennzeichnend für einen Link zwischen der Konfiguration mindestens einer Maschine (3) und der Variation jedes Parameters sind.

3. System nach Anspruch 2, wobei das System (1) zum Durchführen des Korrelierens durch Abgleichen zwischen den lokalen Informationen und den globalen Informationen ausgelegt ist, wobei die globalen Informationen kennzeichnend für ein globales Design oder Layout der Anlage (2) sind.

4. System nach einem der vorhergehenden Ansprüche, wobei das System (1) basierend auf einer Produktionsanforderung, die eine Mehrzahl von Produktionsausgabewerten umfasst, die von der Anlage (2) gemäß jeweiliger unterschiedlicher Rezepte zu produzieren sind, zum Durchführen des Bestimmens, Korrelierens, Auswählens und Zuweisens für jedes Paar von unterschiedlichen Rezepten der Liste ausgelegt ist; wobei das System (1), für jedes Paar von unterschiedlichen Rezepten der Liste für ein Ableiten einer Umstellzeit ausgelegt ist, die für das Durchführen der Anlagenumstellung zwischen den Rezepten des Paares erforderlich ist;
wobei das System (1) zum automatischen Erhalten eines Produktionsprogramms ausgelegt ist, das eine zeitlich geordnete Sequenz von Rezepten umfasst, die von der Anlage zu implementieren sind, wobei das System (1) zum Durchführen des automatischen Erhaltens ausgelegt ist, um die Gesamtumstellungszeit des Produktionsprogramms zu minimieren.

5. System (1) nach einem der vorhergehenden Ansprüche, wobei das System (1) für jeden ausgewählten Bediener, zum automatischen Senden operativer Informationen bezüglich mindestens einer dem Bediener (5) zugewiesenen Phase an ein jeweiliges mobiles Endgerät (7) ausgelegt ist.

6. Verpackungsanlage (2) für fließfähige Produkte, umfassend:
- eine Mehrzahl von Verarbeitungsmaschinen (3) zum Implementieren eines Produktionsrezepts;
- ein System (1) nach einem der vorhergehenden Ansprüche.

7. Verfahren (1) zum Einstellen einer Umstellung für eine Verpackungsanlage (2) für fließfähige Produkte, wobei die Anlage eine Mehrzahl von Verarbeitungsmaschinen (3) zum Implementieren eines Produktionsrezepts umfasst, wobei das Verfahren basierend auf einer Anzahl von Bedienern (5) und einer geforderten Rezeptvariation umfasst, zum:
- automatischen Bestimmen einer Mehrzahl von Umstellungsphasen, von denen jede auf einer jeweiligen Maschine (3) der Mehrzahl von Verarbeitungsmaschinen zum Durchführen der Umstellung der Anlage (2) gemäß der Rezeptvariation durchzuführen ist;
- für jede bestimmte Umstellungsphase, automatischen zeitlichen Korrelieren der bestimmten Phase mit dem Betriebszustand mindestens einer Maschine (3) der Mehrzahl von Verarbeitungsmaschinen, wobei die mindestens eine Maschine von der bestimmten Umstellungsphase nicht betroffen ist;
- für jede korrelierte Umstellungsphase, automatischen Auswählen von zumindest einem jeweiligen Bediener (5) und automatischem Zuweisen der korrelierten Phase zu dem ausgewählten Bediener (5) .

8. Verfahren nach Anspruch 7, wobei:
- die Anlage (2) dazu ausgelegt ist, eine Mehrzahl von unterschiedlichen Rezepten zu implementieren;
- die Rezepte durch jeweilige Datensätze definiert sind, wobei jeder Datensatz eine Mehrzahl von Werten beinhaltet, die jeweiligen Parametern zugeordnet sind, wobei die Parameter ein Format des Containers und/oder ein Format eines auf dem Container anzubringenden Etiketts und/oder eine Art von fließfähigem Produkt und/oder eine Art von auf dem gefüllten Container anzubringendem Verschluss und/oder eine Art von Sekundär- und/oder Tertiärverpackung beinhalten;
- die Bestimmung durch Abgleichen zwischen den Datensätzen und den lokalen Informationen durchgeführt wird, wobei die lokalen Informationen kennzeichnend für einen Link zwischen der Konfiguration mindestens einer Maschine und der Variation jedes Parameters sind.

9. Verfahren nach Anspruch 7 oder 8, wobei das Korrelieren durch Abgleichen zwischen den lokalen Informationen und den globalen Informationen durchgeführt wird, wobei die globalen Informationen kennzeichnend für das globale Design oder Layout der Anlage sind.

10. Produktionsverfahren (1) für eine Verpackungsanlage (2) für fließfähige Produkte, wobei die Anlage (2) eine Mehrzahl von Verarbeitungsmaschinen (3) zum Implementieren eines Produktionsrezepts umfasst, wobei das Produktionsverfahren umfasst:
- basierend auf einer Produktionsanforderung, die eine Mehrzahl von Produktionsausgabewerten umfasst, die von der Anlage gemäß einer Liste jeweiliger unterschiedlicher Rezepte zu produzieren sind, Ausführen eines Verfahrens nach einem der Ansprüche 7 bis 9 für jedes Paar unterschiedlicher Rezepte der Liste, wobei jede Ausführung des Einstellungsverfahrens mit einer erforderlichen Variation durchgeführt wird, die die Variation von einem ersten Rezept des Paares zu einem zweiten Rezept desselben Paares und/oder umgekehrt umfasst;
- für jedes Paar von unterschiedlichen Rezepten der Liste, automatisches Ableiten einer Umstellzeit, die zum Durchführen der Anlagenumstellung zwischen den Rezepten des Paares erforderlich ist;
- automatisches Erhalten eines Produktionsprogramms, das eine zeitlich geordnete Sequenz von Rezepten umfasst, die von der Anlage zu implementieren sind, wobei das automatische Erhalten durchgeführt wird, um die Gesamtumstellungszeit des Produktionsprogramms zu minimieren;
Durchführen der Produktion mit Mitteln der Anlage (2) und gemäß dem erhaltenen Produktionsprogramm.

## Revendications

1. Système (1) de réglage de changement pour une installation (2) de conditionnement de produits versables, ladite installation (2) comportant une pluralité de machines (3) de traitement servant à mettre en oeuvre une seule recette de production, le système (1) étant configuré, d'après un nombre d'opérateurs (5) et une variation de recette requise, pour :
- déterminer automatiquement une pluralité de phases de changement, dont chacune doit être réalisée sur une machine (3) respective de la pluralité de machines de traitement, pour effectuer le changement de l'installation (2) selon la variation de recette ;
- pour chaque phase de changement déterminée, automatiquement corréler temporellement la phase déterminée à l'état opérationnel d'au moins une machine (3) de la pluralité de machines de traitement, ladite ou lesdites machines n'étant pas concernées par la phase de changement déterminée ;
- pour chaque phase de changement corrélée, sélectionner automatiquement au moins un opérateur respectif et affecter automatiquement la phase corrélée à l'opérateur sélectionné.

2. Système selon la revendication 1 :
- l'installation (2) étant configurée pour mettre en oeuvre une pluralité de recettes différentes ;
- les recettes étant définies par des ensembles respectifs de données, chaque ensemble de données comprenant une pluralité de valeurs associées à des paramètres respectifs, lesdits paramètres comprenant un format du récipient et/ou un format d'une étiquette à appliquer sur le récipient et/ou un type de produit versable et/ou un type de fermeture à appliquer au récipient rempli et/ou un type de conditionnement secondaire et/ou tertiaire ;
- le système (1) étant configuré pour réaliser ladite détermination par recoupement entre lesdits ensembles de données et des informations locales, lesdites informations locales étant indicatives d'un lien entre la configuration d'au moins une machine (3) et la variation de chaque paramètre.

3. Système selon la revendication 2, le système (1) étant configuré pour réaliser ladite corrélation par recoupement entre lesdites informations locales et des informations globales, lesdites informations globales étant indicatives d'une conception ou d'une disposition globale de l'installation (2).

4. Système selon l'une quelconque des revendications précédentes, le système (1) étant configuré, sur la base d'une exigence de production comportant une pluralité de valeurs en sortie de production à produire par l'installation (2) selon des recettes respectives différentes, pour réaliser, pour chaque paire de recettes différentes de la liste, ladite détermination, ladite corrélation, ladite sélection et ladite affectation ;
le système (1) étant configuré, pour chaque paire de recettes différentes de la liste, pour déduire un temps de changement nécessaire pour effectuer le changement de l'installation entre les recettes de la paire ;
le système (1) étant configuré pour obtenir automatiquement un programme de production comportant une suite ordonnée temporellement de recettes à mettre en oeuvre par l'installation, le système (1) étant configuré pour réaliser ladite obtention automatique afin de minimiser le temps total de changement du programme de production.

5. Système (1) selon l'une quelconque des revendications précédentes, le système (1) étant configuré, pour chaque opérateur sélectionné, pour envoyer automatiquement à un terminal mobile (7) respectif des informations opératoires concernant au moins une phase affectée à l'opérateur (5).

6. Installation (2) de conditionnement de produits versables comportant :
- une pluralité de machines (3) de traitement servant à mettre en oeuvre une recette de production ;
un système (1) selon l'une quelconque des revendications précédentes.

7. Procédé (1) de réglage de changement pour une installation (2) de conditionnement de produits versables, ladite installation comportant une pluralité de machines (3) de traitement servant à mettre en oeuvre une recette de production, le procédé comportant, d'après un nombre d'opérateurs (5) et une variation de recette requise, les étapes consistant à :
- déterminer automatiquement une pluralité de phases de changement, dont chacune doit être réalisée sur une machine (3) respective de la pluralité de machines de traitement, pour effectuer le changement de l'installation (2) selon la variation de recette ;
- pour chaque phase de changement déterminée, automatiquement corréler temporellement la phase déterminée à l'état opérationnel d'au moins une machine (3) de la pluralité de machines de traitement, ladite ou lesdites machines n'étant pas concernées par la phase de changement déterminée ;
- pour chaque phase de changement corrélée, sélectionner automatiquement au moins un opérateur respectif (5) et affecter automatiquement la phase corrélée à l'opérateur sélectionné (5).

8. Procédé selon la revendication 7 :
- l'installation (2) étant configurée pour mettre en oeuvre une pluralité de recettes différentes ;
- les recettes étant définies par des ensembles respectifs de données, chaque ensemble de données comprenant une pluralité de valeurs associées à des paramètres respectifs, lesdits paramètres comprenant un format du récipient et/ou un format d'une étiquette à appliquer sur le récipient et/ou un type de produit versable et/ou un type de fermeture à appliquer au récipient rempli et/ou un type de conditionnement secondaire et/ou tertiaire ;
- ladite détermination étant réalisée par recoupement entre lesdits ensembles de données et des informations locales, lesdites informations locales étant indicatives d'un lien entre la configuration d'au moins une machine et la variation de chaque paramètre.

9. Procédé selon la revendication 7 ou 8, ladite corrélation étant réalisée par recoupement entre lesdites informations locales et des informations globales, lesdites informations globales étant indicatives de la conception ou la disposition globale de l'installation.

10. Procédé (1) production pour une installation (2) de conditionnement de produits versables, ladite installation (2) comportant une pluralité de machines (3) de traitement servant à mettre en oeuvre une recette de production, le procédé de production comportant les étapes consistant :
- sur la base d'une exigence de production comportant une pluralité de valeurs en sortie de production à produire par l'installation selon une liste de recettes respectives différentes, à exécuter un procédé selon l'une quelconque des revendications 7 à 9 pour chaque paire de recettes différentes de la liste, chaque exécution du procédé de réglage étant réalisée avec une variation requise comportant la variation d'une première recette de la paire à une seconde recette de la même paire et/ou vice versa ;
- pour chaque paire de recettes différentes de la liste, à déduire automatiquement un temps de changement nécessaire pour effectuer le changement de l'installation entre les recettes de la paire ;
- à obtenir automatiquement un programme de production comportant une suite ordonnée temporellement de recettes à mettre en oeuvre par l'installation, ladite obtention automatique étant réalisée afin de minimiser le temps total de changement du programme de production ;
- à effectuer la production au moyen de l'installation (2) et selon le programme de production obtenu.
